**Europäisches Patentamt**

**European Patent Office**

**Office européen des brevets**

(19)

(11) Numéro de publication : **0 366 545 B1**

# (12) FASCICULE DE BREVET EUROPEEN

(45) Date de publication du fascicule du brevet :
**15.04.92 Bulletin 92/16**

(51) Int. Cl.⁵ : **B29D 11/00, B29C 53/04, B29C 43/02**

(21) Numéro de dépôt : **89402944.6**

(22) Date de dépôt : **25.10.89**

(54) **Procédé pour le formage d'une lentille ophtalmique à partir d'un palet en matière synthétique.**

(30) Priorité : **27.10.88 FR 8814046**

(43) Date de publication de la demande :
**02.05.90 Bulletin 90/18**

(45) Mention de la délivrance du brevet :
**15.04.92 Bulletin 92/16**

(84) Etats contractants désignés :
**DE ES GB IT**

(56) Documents cités :
**EP-A- 0 150 537**
**EP-A- 0 195 617**
**FR-A- 2 358 256**
**FR-A- 2 380 117**
**FR-A- 2 602 455**

(56) Documents cités :
**US-A- 3 380 718**
**US-A- 3 423 488**
**US-A- 3 902 693**
**US-A- 4 038 014**
**US-A- 4 129 628**
**US-A- 4 191 717**

(73) Titulaire : **ESSILOR INTERNATIONAL, Cie Générale d'Optique**
**1 Rue Thomas Edison, Echat 902**
**F-94028 Créteil Cédex (FR)**

(72) Inventeur : **Ruhlin, Raymond**
**59bis Avenue Henri Barbusse**
**F-92140 Clamart (FR)**

(74) Mandataire : **CABINET BONNET-THIRION**
**95 Boulevard Beaumarchais**
**F-75003 Paris (FR)**

EP 0 366 545 B1

## Description

La présente invention concerne d'une manière générale la réalisation de lentilles ophtalmiques en matière synthétique, par exemple en matière thermoplastique.

Elle vise plus particulièrement, mais non nécessairement exclusivement, le cas où cette matière synthétique est du polycarbonate.

A ce jour, les lentilles ophtalmiques en polycarbonate sont réalisées soit par injection, soit par pressage à chaud.

Le procédé de réalisation par injection, tel que décrit par exemple dans le brevet français qui, déposé sous le No 77 03937, a été publié sous le No 2.380.117, nécessite des investissements lourds ; il n'est en outre pas applicable à la réalisation de lentilles ophtalmiques de forte épaisseur, et il conduit à la présence, au sein des lentilles ophtalmiques obtenues, en raison même du mode de formation et de refroidissement de celles-ci, de tensions internes élevées, susceptibles d'en perturber les qualités optiques.

Le procédé de réalisation par pressage à chaud, tel que décrit par exemple dans le brevet français qui, déposé sous le No 77 20742 a été publié sous le No 2.358.256 nécessite, lui aussi, des investissements lourds, puisque, partant d'un palet à faces parallèles, ou d'une lentille brute déjà préformée, il nécessite, outre un four, où ce palet ou cette lentille brute est préchauffé, une presse spécifique, propre à lui conférer, à chaud, par action de surfaces de moulage optiquement finies intervenant sous une charge de moulage déterminée, et en pratique horizontalement, sa configuration définitive de lentille ophtalmique.

En outre, ce procédé de réalisation par passage à chaud nécessite un préchauffage des surfaces de moulage et de la pièce à former.

La présente invention a pour objet un procédé de formage permettant, de manière simple, à partir d'éléments à température ambiante et sans exiger des investissements importants, l'obtention de lentilles ophtalmiques finies ou semi-finies exemptes de toute tension interne.

Ce procédé de formage est du genre suivant lequel, partant d'un palet en matière synthétique, on dispose ce palet horizontalement dans un moule à surfaces de moulage optiquement finies et on l'y soumet à chaud à une charge de moulage déterminée, et est d'une manière générale caractérisé en ce que on choisit pour moule un moule dont la surface de moulage supérieure appartient à une coquille montée librement coulissante dans une bague, on limite la charge de moulage à la charge statique résultant du poids de cette coquille, éventuellement augmenté du poids d'une masse de précharge surmontant celle-ci, et on place l'ensemble dans un four.

Sous les seuls effets, d'une part, de la température, qui, en pratique, au cours du cycle de travail correspondant, est élevée au-dessus de la température de transition vitreuse de la matière synthétique concernée, et, d'autre part, de la charge statique, limitée, à laquelle il est soumis, le palet ainsi traité est l'objet d'un affaissement thermique qui le conduit à épouser intimement tant la surface de moulage inférieure, qui le contrebute, que la surface de moulage supérieure, qui le suit dans son affaissement.

Il suffit, à cet effet, d'un simple four, par exemple un four tunnel, sans une quelconque presse.

Les investissements nécessaires en sont donc avantageusement réduits d'autant.

En outre, l'affaissement thermique du palet se faisant de manière circulairement homogène, même si, de préférence, il affecte en priorité sa zone centrale plutôt que sa zone périphérique, il n'en résulte normalement aucune tension interne.

Les caractéristiques et avantages de l'invention ressortiront d'ailleurs de la description qui va suivre, à titre d'exemple, en référence aux dessins schématiques annexés sur lesquels :

la figure 1 est une vue en perspective d'un palet auquel peut être appliqué le procédé de formage suivant l'invention ;

la figure 2 est, à échelle différente, une vue en coupe axiale illustrant la mise en oeuvre de ce procédé, avant le formage du palet concerné ;

la figure 3 est, à échelle différente, une vue schématique en élévation d'un four mis en oeuvre pour ce formage ;

la figure 4 est une vue en coupe axiale analogue à celle de la figure 2, après ce formage ;

la figure 5 est une vue en coupe axiale qui, elle aussi analogue à celle de la figure 2, concerne une première variante de mise en oeuvre du procédé suivant l'invention ;

la figure 6 est une vue en coupe axiale qui, elle aussi analogue à celle de la figure 2, concerne une deuxième variante de mise en oeuvre de ce procédé.

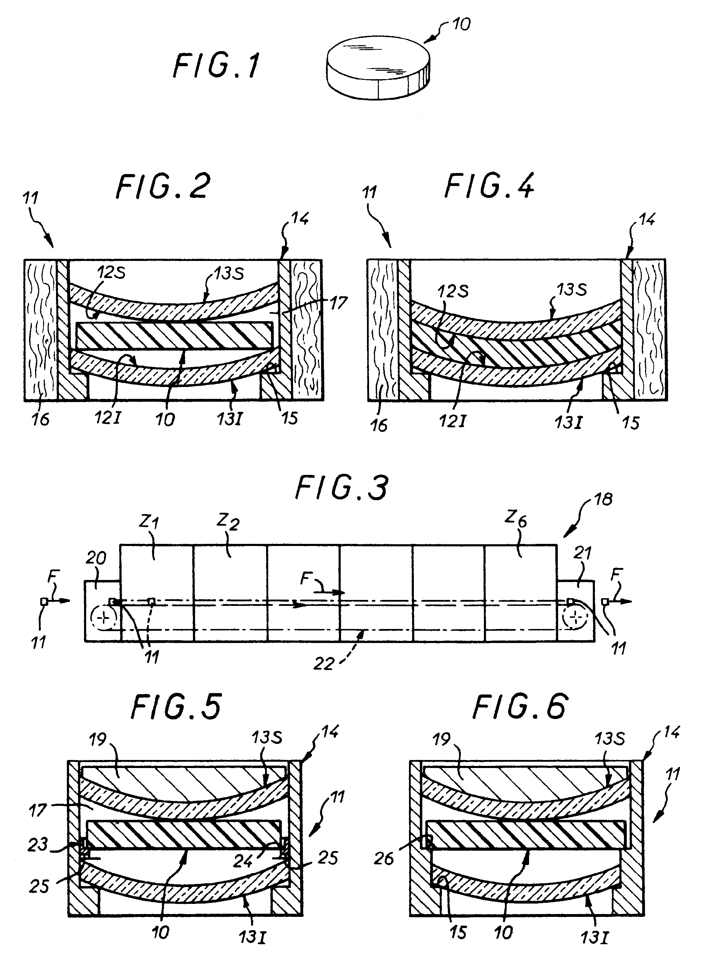

Sur la figure 1, on a représenté, sous la référence générale 10, un palet en matière synthétique.

Ce palet est par exemple en polycarbonate ; il s'agit alors de préférence d'un polycarbonate du type de ceux vendus sous les désignations commerciales "MAKROLON" ou "LEXAN".

De manière connue en soi, le palet 10 peut être obtenu par découpe d'une plaque, par exemple par poinçonnage, ou par tronçonnage d'une barre.

Dans la forme de réalisation représentée, il a, périphériquement, un contour circulaire.

Mais ce contour pourrait tout aussi bien être polygonal, et par exemple pentagonal, notamment lorsque, le palet 10 venant de découpe d'une plaque, il s'agit de minimiser les chutes correspondantes.

De manière connue en soi, pour le formage, à sa configuration définitive déterminée, du palet 10, on dispose horizontalement ce palet 10 dans un moule 11 dont tant la surface de moulage supérieure 12S que la surface de moulage inférieure 12I sont des surfaces de moulage optiquement finies.

Suivant l'invention, on choisit pour moule 11 un moule dont la surface de moulage supérieure 12S appartient à une coquille 13S montée librement coulissante dans une bague 14.

En pratique, dans la forme de mise en oeuvre représentée, la surface de moulage inférieure 12I appartient elle aussi à une coquille 13I, qui, elle aussi librement engagée dans la bague 14, repose, par simple gravité, sur un épaulement 15 prévu transversalement à cet effet sur la surface interne de cette bague 14, à la base de celle-ci.

Par exemple, les coquilles de moulage 13S, 13I, qui ont périphériquement un contour circulaire à l'image de celui du palet 10, peuvent l'une et/ou l'autre être des coquilles équi-épaisses en verre, soit qu'il s'agisse de coquilles en verre ordinaire d'épaisseur relativement importante, de l'ordre par exemple de 6 mm, soit qu'il s'agisse de coquilles en verre d'épaisseur plus faible, de l'ordre par exemple de 3 mm, et ayant subi une trempe chimique ou thermique.

Dans l'un et l'autre cas, leur surface de moulage 12S, 12I a de préférence fait l'objet d'un silanage, c'est-à-dire d'un traitement propre à les garnir d'un revêtement en silane, de manière à empêcher lors de l'opération de formage l'adhésion de la matière synthétique sur les surfaces de moulage.

Bien entendu, d'autres revêtements que le silane et ayant les mêmes propriétés d'anti-adhérence peuvent être envisagés.

En variante, les coquilles de moulage 13S, 13I peuvent l'une et/ou l'autre être des coquilles métalliques, avec, sur leur surface de moulage 12S, 12I, une pellicule en verre ayant elle aussi fait l'objet d'un silanage.

En variante, encore, il peut s'agir de coquilles entièrement métalliques, dont les surfaces de moulage 12S, 12I sont usinées avec tout le poli optique nécessaire et sont ensuite soumises à un agent démoulant ou à un traitement de surface équivalent.

Les coquilles de moulage 13S, 13I ne sont d'ailleurs pas nécessairement de natures identiques.

Dans tous les cas, les surfaces de moulage 12S, 12I de ces coquilles de moulage 13S, 13I présentent les caractéristiques de géométrie complémentaires de celles requises pour la lentille ophtalmique recherchée.

Par exemple, la surface de moulage supérieure 12S peut être une surface sphérique.

Il peut en être de même pour la surface de moulage inférieure 12I.

Mais celle-ci, qui est destinée à la formation de la surface convexe de la lentille ophtalmique recherchée, peut également être une surface quelconque, et par exemple une surface progressive.

La bague 14 qui complète le moule 11, en confinant périphériquement son volume de moulage interne 17, et qui est à cet effet une bague cylindrique au contour des coquilles de moulage 13S, 13I, peut, quant à elle, être par exemple réalisée en bronze, avec, sur sa surface intérieure, un revêtement en matière synthétique, et par exemple un revêtement en polytrétrafluroéthylène du type de celui connu sous la désignation commerciale "TEFLON".

Mais elle peut aussi être réalisée en verre, avec, de préférence, comme précédemment, dans ce cas, un revêtement de silane sur sa surface intérieure.

Quoi qu'il en soit, il est prévu, annulairement, entre la bague 14 ainsi constituée et les coquilles de moulage 13S, 13I, le jeu juste suffisant pour un libre coulissement de ces coquilles de moulage 13S, 13I dans cette bague 14.

Dans la forme de réalisation représentée sur les figures 2 et 4, la bague 14 est, par ailleurs, calorifugée extérieurement par un revêtement thermiquement isolant 16 qui court sur toute sa hauteur.

De préférence, avant sa mise en place dans le moule 11, le palet 10 subit un étuvage à 125°C pendant 48 heures, sous une pression de 20 Pa.

De préférence, également, cette mise en place se fait sous atmosphère propre, et, par exemple, sous atmosphère ionisée.

Pour cette mise en place, le palet 10 est simplement posé, par sa périphérie, sur la coquille de moulage inférieure 13I, elle-même préalablement mise en place dans la bague 14.

La coquille de moulage supérieure 13S est alors elle-même posée, par sa zone centrale, sur le palet 10.

Bien entendu, en variante, la position respective des coquilles de moulage 13S et 13I peut être inversée de sorte que la surface de moulage inférieure soit la surface convexe.

Tel que schématisé à la figure 3, on place ensuite l'ensemble dans un four 18.

Ainsi, suivant l'invention, la charge de moulage appliquée au palet 10 lors de son formage est limitée à la charge statique résultant, dans la forme de mise en oeuvre illustrée sur la figure 2, du seul poids de la coquille de moulage 13S.

Dans la variante de mise en oeuvre illustrée par la figure 5, au poids de la coquille de moulage supérieure 13S s'ajoute celui d'une masse de précharge 19 surmontant à cet effet cette coquille de moulage supérieure 13S.

Mais le poids de cette masse de précharge 19 est lui-même réduit, de l'ordre par exemple de 1 kg.

En toute hypothèse, la charge de moulage à laquelle est soumis le palet 10 reste limitée, en étant par exemple toujours inférieure à 1,5 kg.

Dans la forme de mise en oeuvre représentée à la figure 3, le four 18 est un four tunnel qui, outre une zone de chargement 20 à son extrémité d'entrée et une zone de déchargement 21 à son extrémité de sortie, comporte, les unes à la suite des autres, une pluralité de zones distinctes Z1, Z2 etc. Zn, au nombre de six par exemple, dont la température peut être réglée et contrôlée individuellement.

Chacune de ces zones de travail Z1, Z2 etc. Zn a par exemple une longueur de 45 cm.

Le four 18 comporte en outre un convoyeur 22 propre à permettre d'y faire circuler, de son extrémité d'entrée à son extrémité de sortie, tel que schématisé par des flèches F sur la figure 3, des moules 11 contenant chacun un palet 10.

En un point au moins du four 18, c'est-à-dire dans une zone Z1, Z2 etc. Zn au moins de celui-ci, la température de régulation dépasse la température de transition vitreuse de la matière synthétique constitutive d'un palet 10.

On donnera, ci-après, à titre d'exemple non limitatif, et, donc, sans qu'il puisse en être tiré une quelconque limitation pour l'invention, deux exemples de cycle de travail ayant donné satisfaction pour le formage d'un tel palet 10.

Les températures qui y sont indiquées, en degrés Celsius, sont celles des zones Z1, Z2 ... Zn correspondantes du four 18.

EXEMPLE 1

     – Zone 1 : 290°
     – Zone 2 : 280°
     – Zone 3 : 260°
     – Zone 4 : 260°
     – Zone 5 : 260°
     – Zone 6 : 270°
     – vitesse linéaire d'avance du convoyeur 22 : 3,2 cm/mn

EXEMPLE 2

     – Zone 1 : 320°
     – Zone 2 : 340°
     – Zone 3 : 380°
     – Zone 4 : 380°
     – Zone 5 : 340°
     – Zone 6 : 320°
     – vitesse linéaire d'avance du convoyeur 22 : 8 cm/mn

L'exemple 1 correspond à un affaissement naturel du palet 10, la charge statique à laquelle il est soumis résultant du poids de la seule coquille de moulage supérieure 13S, comme représenté à la figure 2.

L'exemple 2 correspond au contraire au cas où, comme représenté à la figure 5, il est prévu une masse de précharge 19 sur cette coquille de moulage supérieure 13S.

Quoi qu'il en soit, à la sortie du four 18, on retire de chaque moule 11, et plus précisément de la bague 14 d'un tel moule 11, l'ensemble qu'y constituent le palet 10 et les deux coquilles de moulage 13S, 13I flanquant celui-ci.

Cet ensemble subit alors un recuit à 135°C pendant 1 à 6 heures dans une étuve.

Cette opération de recuit peut être effectuée directement dans le four tunnel 18 utilisé pour l'opération de formage. A cet effet, ce four 18 peut comporter, dans le prolongement du convoyeur 22, un second convoyeur et d'autres zones distinctes de chauffage dont la température est réglée en conséquence.

On procède ensuite à la séparation des coquilles de moulage 13S, 13I, et celles-ci peuvent être immédiatement réutilisées dans un nouveau cycle de travail.

Le palet 10 ainsi dégagé constitue alors la lentille finie recherchée.

Dans ce qui précède, il a été supposé qu'il s'agissait d'une lentille finie d'épaisseur au bord de l'ordre de 1,5 mm ou d'épaisseur au centre de l'ordre de 2 mm.

Mais il peut tout aussi bien s'agir d'une lentille semi-finie, c'est-à-dire d'une lentille devant encore subir une phase d'usinage.

Dans un tel cas, l'épaisseur initiale du palet 10 doit être supérieure et être par exemple de l'ordre de 12 mm.

Dans la variante de mise en oeuvre illustrée par la figure 5, il est interposé, périphériquement, entre le palet 10 et la surface de moulage inférieure 12I, un anneau 23, formant entretoise.

Cet anneau a pour but d'assurer que, lors de son affaissement thermique, c'est d'abord par sa zone centrale que le palet 10 prendra contact avec la coquille de moulage inférieure 13I, ce qui élimine tout risque qu'une quelconque poche d'air puisse se trouver emprisonnée entre ce palet 10 et cette coquille de moulage inférieure 13I.

Par exemple, cet anneau 23 est en bronze ou en polytrétrafluroéthylène de type "TEFLON".

Dans la forme de réalisation représentée sur la figure 5, il présente, transversalement, un épaulement 24, sur lequel est déposé le palet 10.

Cet anneau 23 a ainsi une section transversale en forme de L dans cette forme de réalisation. En variante, il peut avoir une section transversale de contour rectangulaire ou carré.

De préférence, cet anneau 23 comporte par ailleurs au moins un évent propre à l'évacuation de l'air entre le palet et la coquille de moulage inférieure 13I.

Dans la forme de réalisation représentée à la figure 5, il s'agit d'une saignée 25 présente radialement à sa surface inférieure.

En pratique, il comporte ainsi, convenablement réparties circulairement, une pluralité de telles saignées 25.

Dans la forme de réalisation illustrée par la figure 6, la bague 14 comporte un second épaulement 26 situé au-dessus du premier épaulement 15, cet épaulement 26 étant destiné à recevoir en appui le palet 10.

Cet épaulement 26 remplit la même fonction que l'anneau 23 précédent.

Dans tous les cas, et ainsi qu'on le notera, le procédé suivant l'invention est avantageusement susceptible d'une mise en oeuvre en continu.

Bien entendu, l'invention ne se limite pas aux formes de mise en oeuvre décrites et représentées, mais englobe toute variante d'exécution.

Par exemple, on peut utiliser en lieu et place du four tunnel une étuve programmable pour effectuer les opérations d'affaissement et de recuit.

En outre, au lieu d'être simplement découpé dans une plaque, et donc être à faces planes parallèles, comme plus particulièrement décrit et représenté, le palet initial peut tout aussi bien être préformé, et par exemple présenter par avance deux faces sphériques parallèles, de manière à accélérer et faciliter son formage définitif.

## Revendications

1. Procédé pour le formage d'une lentille ophtalmique à partir d'un palet en matière synthétique, du genre suivant lequel on dispose ledit palet (10) horizontalement dans un moule (11) à surfaces de moulage (12S, 12I) optiquement finies et on l'y soumet à chaud à une charge de moulage déterminée, caractérisé en ce que on choisit pour moule (11) un moule dont la surface de moulage supérieure (12S) appartient à une coquille (13S) montée librement coulissante dans une bague (14), on limite la charge de moulage à la charge statique résultant du poids de cette coquille (13S), éventuellement augmenté du poids d'une masse de précharge (19) surmontant celle-ci, et on place l'ensemble dans un four (18).

2. Procédé suivant la revendication 1, caractérisé en ce que la surface de moulage inférieure (12I) appartient elle aussi à une coquille (13I) et celle-ci repose par gravité sur un épaulement (15) de la bague (14).

3. Procédé suivant l'une quelconque des revendications 1, 2, caractérisé en ce que, avant sa mise en place dans le moule (11), le palet (10) subit un étuvage.

4. Procédé suivant l'une quelconque des revendications 1 à 3, caractérisé en ce que la mise en place du palet (10) dans le moule (11) se fait sous atmosphère propre.

5. Procédé suivant l'une quelconque des revendications 1 à 4, caractérisé en ce que le four (18) mis en oeuvre est un four tunnel en un point au moins duquel la température dépasse la température de transition vitreuse de la matière synthétique constitutive du palet (10).

6. Procédé suivant l'une quelconque des revendications 1 à 5, caractérisé en ce que, entre le palet (10) et la surface de moulage inférieure (12I), est interposé, périphériquement, un anneau (23) formant entretoise.

7. Procédé suivant l'une quelconque des revendications 1 à 5, caractérisé en ce que la bague (14) comporte un épaulement (26) adapté à recevoir en appui le palet (10).

8. Procédé suivant l'une quelconque des revendications 1 à 7, caractérisé en ce que la bague (14) du moule est calorifugée.

9. Procédé suivant l'une quelconque des revendications 1 à 8, caractérisé en ce que, après moulage, l'ensemble que constituent le palet (10) et les deux coquilles de moulage (13S, 13I) qui le flanquent subit un recuit.

10. Procédé suivant l'une quelconque des revendications 1 à 9, caractérisé en ce que la charge statique de moulage est limitée à 1,5 kg.

## Patentansprüche

1. Verfahren zur Herstellung einer ophthalmischen Linse ausgehend von einem Träger aus synthetischem Material, derart, daß man den Träger (10) horizontal in eine Form (11) mit Formflächen (12S, 12I) stellt, die optisch abgeschlossen sind und ihn im Warmen einer bestimmten Formbelastung aussetzt, dadurch gekennzeichnet daß man als Form (11) eine Form wählt, deren obere Formfläche (12S) zu einer Kokille (13S) gehört, die freigleitend in einem Ring (14) angebracht ist, man die Formbelastung auf die statische Belastung beschränkt, die sich aus dem Gewicht der Kokille (13S) ergibt, möglicherweise vergrößert um das Gewicht einer Vorbelastungs-Masse (19), die jene übersteigt, und man das Ganze in einen Ofen (18) stellt.

2. Verfahren nach Anspruch 1, dadurch gekennzeichnet, daß die untere Formfläche (12I) ebenfalls zu einer Kokille (13I) gehört und diese durch Schwerkraft auf einer Schulter (15) des Rings (14) liegt.

3. Verfahren nach einem der Ansprüche 1, 2, dadurch gekennzeichnet, daß der Träger (10) vor seiner Bereitstellung in der Form (11) ein Nachhärten bzw. Tempern erfährt.

4. Verfahren nach einem der Ansprüche 1 bis 3, dadurch gekennzeichnet, daß die Bereitstellung des Trägers (10) in der Form (11) unter sauberer Atmosphäre geschieht.

5. Verfahren nach einem der Ansprüche 1 bis 4, dadurch gekennzeichnet, daß der eingesetzte Ofen (18) ein Kanalofen ist, und zwar in einem Punkt, unterhalb dessen die Temperatur die Glasübergangs-Temperatur des synthetischen Materials übersteigt, welches den Träger (10) bildet.

6. Verfahren nach einem der Ansprüche 1 bis 5, dadurch gekennzeichnet, daß zwischen dem Träger (10) und der unteren Formfläche (12I) peripher ein Ring (23) zwischengelagert ist, der ein Abstandsstück bzw. einen Steg bildet.

7. Verfahren nach einem der Ansprüche 1 bis 5, dadurch gekennzeichnet, daß der Ring (14) eine Schulter (26) aufweist, die dazu eingerichtet ist, den Träger (10) in Anlage aufzunehmen.

8. Verfahren nach einem der Ansprüche 1 bis 7, dadurch gekennzeichnet, daß der Ring (14) der Form wärmegedämmt ist.

9. Verfahren nach einem der Ansprüche 1 bis 8, dadurch gekennzeichnet, daß nach dem Formen das Ganze, welches durch den Träger (10) und zwei Formkokillen (13S, 13I) gebildet ist, die sich flankieren, ein Nachhärten bzw. Tempern erfährt.

10. Verfahren nach einem der Ansprüche 1 bis 9, dadurch gekennzeichnet, daß die statische Formbelastung auf 1,5 kg beschränkt ist.

## Claims

1. A process for forming an ophthalmic lens from a disc of synthetic material, of the kind wherein said disc (10) is disposed horizontally in a mould (11) having optically finished moulding surfaces (12S, 12I) and is subjected therein in the hot condition to a given moulding force, characterised in that the mould (11) selected is a mould rose upper moulding surface (12S) belongs to a shell member (13S) which is freely slidably mounted in a ring (14), the moulding force is limited to the static load resulting from the weight of said shell member (13S), possibly increased by the weight of a pre-loading mass (19) disposed upon the shell member, and the assembly is placed in an oven (18).

2. A process according to claim 1 characterised in that the lower moulding surface (12I) also belongs to a shell member (13I) and the latter rests under the effect of gravity on a shoulder (15) of the ring (14).

3. A process according to either one of claims 1 and 2 characterised in that, before it is placed in the mould (11), the disc (10) is subjected to a baking operation.

4. A process according to any one of claims 1 to 3 characterised in that the operation of placing the disc (10) in the mould (11) is effected in a clean atmosphere.

5. A process according to any one of claims 1 to 4 characterised in that the oven (18) used is a tunnel oven at one point at least of which the temperature exceeds the vitreous transition temperature of the synthetic material forming the disc (10).

6. A process according to any one of claims 1 to 5 characterised in that a ring (23) forming a spacer means is peripherally interposed between the disc (10) and the lower moulding surface (12I).

7. A process according to any one of claims 1 to 5 characterised in that the ring (14) comprises a shoulder (26) adapted to receive and support the disc (10).

8. A process according to any one of claims 1 to 7 characterised in that the ring (14) of the mould is thermally insulated.

9. A process according to any one of claims 1 to 8 characterised in that after moulding the assembly formed by the disc (10) and the two moulding shell members (13S, 13I) rich are disposed on respective sides thereof is subjected to an annealing operation.

10. A process according to any one of claims 1 to 5 characterised in that the static moulding load is limited to 1.5 kg.

FIG.1

FIG.2

FIG.4

FIG.3

FIG.5

FIG.6